# EUROPÄISCHE PATENTANMELDUNG

(11) **EP 3 418 167 A1**
(43) Veröffentlichungstag der Anmeldung: **26.12.2018**
(21) Anmeldenummer: 18166457.4
(22) Anmeldetag: 10.04.2018
(51) Int. Cl.: B62D 55/084

(54) **RAUPENFAHRWERK**

(30) Priorität: 23.06.2017 DE 102017113910
(71) Anmelder: Klemm Bohrtechnik GmbH, 57489 Drolshagen (DE)
(72) Erfinder: WURM, Thomas, 57482 Wenden-Gerlingen (DE)
(74) Vertreter: Wunderlich & Heim Patentanwälte Partnerschaftsgesellschaft mbB

(57) **Zusammenfassung**

Die Erfindung betrifft ein Raupenfahrwerk mit einem Fahrwerksgrundkörper, an dessen Längsseiten jeweils mindestens ein Raupenfahrschiff angeordnet ist. Gemäß der Erfindung ist vorgesehen, dass mindestens ein Raupenfahrschiff mit einer Stützeinrichtung mit mindestens einem Stützelement versehen ist, welches verstellbar zwischen einer Rückzugsposition und einer Stützposition gelagert ist, in welcher das Stützelement zur Verlagerung einer Kippkante an dem Raupenfahrschiff zum Boden hin gedrückt ist.

## Beschreibung

Die Erfindung betrifft ein Raupenfahrwerk mit mindestens einem Fahrwerksgrundkörper, an dessen Längsseite jeweils mindestens ein Raupenfahrschiff angeordnet ist, gemäß dem Oberbegriff des Anspruchs 1.

Derartige Raupenfahrwerke werden für unterschiedliche Anwendungszwecke bei Fahrzeugen vorgesehen, welche in einem unebenen Gelände eingesetzt werden. Ein häufiger Einsatzzweck von Raupenfahrwerken ist bei mobilen Baumaschinen gegeben. Solche Baumaschinen weisen häufig im Verhältnis zur Aufstandsfläche einen relativ hohen Gesamtschwerpunkt auf, was für die Sicherheit gegenüber Umsturz von Bedeutung ist.

Die Abmessungen des Fahrwerks, in der Regel sind dies in der Breite die Spur und in der Länge der Achsabstand der äußersten Achsen, bestimmen die Aufstandsfläche der Baumaschine. Die Verbindungslinien der in der Regel rechteckigen Aufstandsfläche bilden als Geradenabschnitte die sogenannten Kippkanten. Die Kippkanten definieren den Momentanpol, um den das Bohrgerät in einer Umsturzsituation eine rotatorische Kipp- beziehungsweise Umsturzbewegung ausführen kann.

Bei Baumaschinen mit einer rechteckigen Aufstandsfläche wird üblicherweise das Risiko einer Kippbewegung nach vorne oder hinten oder seitlich nach rechts oder links betrachtet. Durch die Berechnung der einwirkenden Kräfte und Momente in den jeweiligen Schwerpunkten der einzelnen Baumaschinenkomponenten wird ein rechnerischer Nachweis für die Standsicherheit erbracht. Hierfür existiert eine Reihe von Normen, nach denen die Auslegung vorzunehmen ist. Allgemein wird dabei entweder das Verhältnis von kippenden zu stabilisierenden Momenten berechnet oder es wird unter Einbeziehung der Höhenkoordinaten der Einzelschwerpunkte ein sogenannter Standsicherheitswinkel berechnet.

In vielen Fällen muss die erforderliche Standsicherheit durch eine optimale Kombination der Massen und Einzelschwerpunktkoordinaten mit der Größe der Aufstandsfläche erzielt werden. Der Grund dafür ist, insbesondere bei hoch aufragenden Baumaschinen, ein wirtschaftliches, nicht überdimensioniertes, aber dennoch sicheres Fahrwerk auszulegen und zu konstruieren. Eine Baumaschine mit einer Rechnereinheit zur Bestimmung der Kippsicherheit geht aus der EP 2 378 053 A1 hervor.

Zur Erhöhung der Standsicherheit ist es grundsätzlich bekannt, die Raupenfahrschiffe an einem Fahrwerksgrundkörper verstellbar anzuordnen. So können die Raupenfahrschiffe beim Einsatz im unebenen Gelände seitlich ausgefahren werden, wobei sich die Spur verbreitert und insgesamt die Aufstandsfläche erhöht. Derartige Maßnahmen sind konstruktiv aufwändig und oft nur an relativ großen Baumaschinen sinnvoll.

Eine weitere Möglichkeit zur Erhöhung der Standsicherheit besteht darin, Abstützungen einzusetzen, deren Auflagepunkt am Boden außerhalb des vorhandenen Fahrwerks liegen, wie es beispielsweise aus der EP 2 815 033 B1 oder der WO 2007/129337 A1 bekannt ist. Durch derartige Abstützungen werden die Abstände der jeweils gegenüberliegenden, parallel orientierten Kippkanten der Baumaschine vergrößert. Bei vielen Baumaschinen sind solche Abstützungen so konstruiert, dass sie in der Transportsituation der Baumaschine innerhalb der Transportmessungen eingezogen werden können. Derartige Abstützeinrichtungen sind platz- und kostenaufwändig.

Bei besonders kleinen oder kompakten Baumaschinen kann es vorkommen, dass die Platzverhältnisse es nicht erlauben, zusätzliche Abstützungen außerhalb des Fahrwerks vorzusehen.

Der Erfindung liegt die **Aufgabe** zugrunde, ein Raupenfahrwerk anzugeben, bei welchem eine verbesserte Kippsicherheit in einfacher und kompakter Weise erreichbar ist.

Diese Aufgabe wird nach der Erfindung durch ein Raupenfahrwerk mit den Merkmalen des Anspruchs 1 gelöst. Bevorzugte Ausführungsformen der Erfindung sind in den abhängigen Ansprüchen angegeben.

Das erfindungsgemäße Raupenfahrwerk ist dadurch gekennzeichnet, dass mindestens ein Raupenfahrschiff mit einer Stützeinrichtung mit mindestens einem Stützelement versehen ist, welches verstellbar zwischen einer Rückzugsposition und einer Stützposition gelagert ist, in welcher das Stützelement zur Verlagerung einer Kippkante an dem Raupenfahrschiff zum Boden hin gedrückt ist.

Eine Grundidee der Erfindung liegt darin, eine Stützeinrichtung unmittelbar an einem Raupenfahrschiff anzuordnen. Dabei besteht in einem Mittenbereich eines Raupenfahrschiffs in der Regel ein gewisser freier Bauraum, um einen zusätzliche Stützeinrichtung anzubringen. Diese Stützeinrichtung weist mindestens ein Stützelement auf, welches zwischen einer Rückzugsposition und einer Stützposition gelagert ist, bei welcher das Stützelement in Richtung auf den Boden gedrückt ist. Hierdurch kann eine Kippkante vorzugsweise längs des Raupenfahrschiffs seitlich nach außen verlagert oder verschoben werden. Dies erhöht so die Größe der Aufstandsfläche und verbessert damit die Kippsicherheit eines entsprechenden Fahrzeugs, insbesondere in unebenem Gelände.

Grundsätzlich kann das Stützelement über eine entsprechende Mechanik von Hand verstellt werden. Besonders zweckmäßig ist es nach einer Weiterbildung der Erfindung, dass zum Verstellen des Stützelementes mindestens ein Stellzylinder vorgesehen ist, der an dem Raupenfahrwerk angebracht ist. Der Stellzylinder ist energetisch angetrieben, vorzugsweise hydraulisch. Der Hydraulikzylinder kann dabei an das interne Hydrauliksystem der Maschine angeschlossen sein. Das Ein- und Ausfahren des Stellzylinders kann vorzugsweise von einer Bedienperson aus einem üblichen Bedienstand der Maschine durchgeführt werden.

Eine weitere bevorzugte Ausführungsform der Erfindung besteht darin, dass die Raupenkette Raupenplatten aufweist und dass das mindestens eine Stützelement in der Stützposition zum Übertragen einer Druckkraft auf einen Randbereich mindestens einer Raupenplatte aufsitzt. Die Raupenkette ist dabei aus der eigentlichen Kette mit daran angebrachten Raupenplatten, auch Bodenplatten genannt, aufgebaut. Die Raupenplatten verteilen die Gewichtskraft der Maschine auf eine größere Fläche, so dass sich die Flächenpressung reduziert. Die Raupenketten können mit Metall, Gummi und/oder einem Kunststoff gebildet sein. In einem Mittenbereich der Raupenplatten liegen die Räder des Raupenfahrwerks auf, so dass die Raupenplatten im Wesentlichen in einem Mittenbereich belastet sind. Durch ein gezieltes Aufbringen von Stützkräften auf einen möglichst außen liegenden Bereich der Raupenplatten wurde nach einer Erkenntnis der Erfindung festgestellt, dass sich hierdurch die tatsächliche Kippkante bis an den äußeren Rand der Raupenplatten verschieben lässt, insbesondere wenn Raupenplatten mit Gummi verwendet werden. Somit kann hierdurch eine Erhöhung der Aufstandsfläche des Raupenfahrwerks und damit eine Verbesserung der Kippsicherheit erzielt werden.

Alternativ kann es nach einer Weiterbildung der Erfindung vorgesehen sein, dass das mindestens eine Stützelement in der Stützposition unmittelbar auf dem Boden aufsitzt. Somit kann eine Kippkante in der Stützposition über die bestehenden Abmessungen eines Raupenfahrwerks hinaus verlagert werden.

Besonders zweckmäßig ist es nach einer Ausführungsvariante der Erfindung, dass das Stützelement an seinem freien Ende eine Auflageplatte und/oder mindestens einen Rollenkörper aufweist. Die Auflageplatte erhöht die Auflagefläche und senkt somit die Flächenpressung. Hierdurch kann eine verbesserte Stützwirkung erzielt werden. Die Auflageplatte kann vorzugsweise kreisförmig oder eine beliebige polygonale Form aufweisen. Alternativ oder ergänzend sind ein oder mehr Rollenkörper vorgesehen. Somit kann in der Stützposition die Raupenkette bewegt werden.

Dies ist gemäß der Erfindung in bevorzugter Weise auch dadurch weitergebildet, dass mehrere Stützelemente an jedem Raupenfahrschiff angeordnet sind, wobei jedes Stützelement als ein separater Stempel ausgebildet ist. Vorzugsweise sind mindestens zwei stempelartige Stützelemente an jedem Raupenfahrschiff zur Verschiebung der Kippkante angeordnet.

Eine verbesserte Kippstabilität lässt sich nach einer weiteren Ausführungsvariante der Erfindung dadurch erzielen, dass die Auflageplatte balkenförmig ausgebildet ist. Die balkenförmige Auflageplatte kann sich dabei vorzugsweise parallel zu den Raupenfahrschiffen erstrecken.

Grundsätzlich kann eine balkenförmige Auflageplatte durch ein Einzelstützelement aus- und eingefahren werden. Besonders zweckmäßig ist es nach einer Weiterbildung der Erfindung, dass die balkenförmige Auflageplatte mit mehreren Stützzylindern verbunden ist. Vorzugsweise sind diese in den Endbereichen der balkenförmigen Auflageplatte angeordnet.

Eine besonders Platz sparende und damit kompakte Anordnung eines erfindungsgemäßen Raupenfahrwerks wird dadurch erzielt, dass die Stützeinrichtung an einem Nabenbereich der Räder des Raupenfahrschiffs angebracht ist. Die Stützeinrichtung kann dabei insbesondere lösbar angebracht sein. Alternativ kann die Stützeinrichtung auch an Zwischenbereichen zwischen den Rädern am Raupenfahrschiff befestigt sein.

Eine besonders kompakte Anordnung des Raupenfahrwerks wird nach einer Weiterbildung der Erfindung dadurch erreicht, dass die Stützeinrichtung zumindest in der Rückzugsposition des mindestens einen Stützelementes nicht über einen Außenumfang des Raupenfahrschiffs hinausragt. Damit ist die Stützeinrichtung insbesondere beim Transport des Raupenfahrwerks oder einer Maschine mit diesem Raupenfahrwerk nicht störend.

Grundsätzlich kann das Raupenfahrwerk an einem beliebigen Fahrzeug angeordnet sein, etwa an einem Transportfahrzeug, einem landwirtschaftlichen Gerät, einem militärischen Fahrzeug oder ähnlichem. Besonders vorteilhaft ist es nach einer Ausführungsvariante der Erfindung, dass eine Baumaschine vorgesehen ist, an welcher das vorbeschriebene Raupenfahrwerk angeordnet ist.

Gemäß einer Weiterbildung der Erfindung kann die Baumaschine als ein Bohrgerät, ein Kran, ein Bagger oder ein Trägergerät für eine Schlitzwandfräse, eine Ramme oder einen Rüttler ausgebildet sein.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine perspektivische Darstellung einer Baumaschine mit einem erfindungsgemäßen Raupenfahrwerk mit einem Stützelement in Rückzugsposition;
- Fig. 2: eine perspektivische Darstellung der Baumaschine von Fig. 1 mit dem Stützelement in einer ausgefahrenen Stützposition;
- Fig. 3: eine Seitenansicht der Baumaschine von Fig. 1;
- Fig. 4: eine Seitenansicht der Baumaschine von Fig. 2;
- Fig. 5: eine schematische Querschnittsansicht der Baumaschine im Zustand gemäß Figuren 1 und 3;
- Fig. 6: eine schematische Querschnittsansicht der Baumaschine im Zustand gemäß Figuren 2 und 4;
- Fig. 7: eine perspektivische Darstellung einer Baumaschine mit einem abgewandelten Raupenfahrwerk;
- Fig. 8: eine Seitenansicht der Baumaschine von Fig. 7;
- Fig. 9: eine schematische Querschnittsansicht der Baumaschine von Figuren 7 und 8;
- Fig. 10: eine Seitenansicht einer weiteren Baumaschine mit einem abgewandelten Raupenfahrwerk mit einem Stützelement in Rückzugsposition;
- Fig. 11: eine Seitenansicht der Baumaschine von Fig. 10 mit dem Stützelement in einer ausgefahrenen Stützposition;
- Fig. 12: eine schematische Querschnittsansicht der Baumaschine im Zustand von Fig. 10;
- Fig. 13: eine schematische Querschnittsansicht der Baumaschine im Zustand von Fig. 11;
- Fig. 14: eine weitere Baumaschine mit einem abgewandelten erfindungsgemäßen Raupenfahrwerk mit einem Stützelement in Rückzugsposition;
- Fig. 15: eine schematische Ansicht der Baumaschine von Fig. 14 mit dem Stützelement in einer ausgefahrenen Stützposition;
- Fig. 16: eine Seitenansicht einer weiteren Baumaschine mit einem weiteren abgewandelten erfindungsgemäßen Raupenfahrwerk mit einem Stützelement in Rückzugsposition;
- Fig. 17: eine Seitenansicht der Baumaschine von Fig. 16 mit dem Stützelement in einer ausgefahrenen Stützposition;
- Fig. 18: eine schematische Querschnittsansicht der Baumaschine im Zustand von Fig. 16;
- Fig. 19: eine schematische Querschnittsansicht der Baumaschine im Zustand von Fig. 17;
- Fig. 20: eine perspektivische Ansicht einer weiteren Baumaschine mit einem weiteren abgewandelten Raupenfahrwerk mit Stützelement in einer Rückzugsposition; und
- Fig. 21: eine perspektivische Ansicht der Baumaschine von Fig. 20 mit dem Stützelement in einer ausgefahrenen Stützposition.

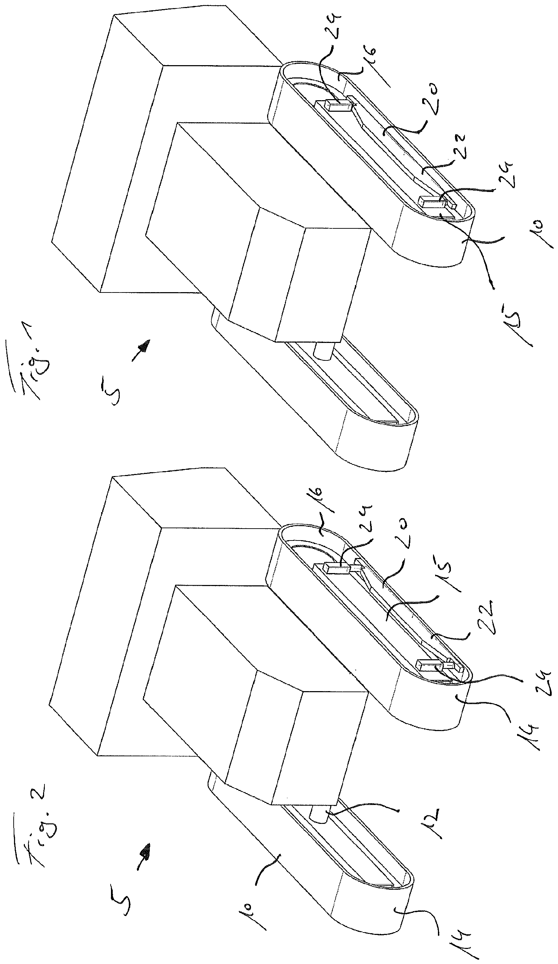

Bei einer ersten Ausführungsform einer Baumaschine 5 mit einem erfindungsgemäßen Raupenfahrwerk 10 gemäß den Figuren 1 bis 6 ist ein Raupenfahrwerk 10 mit zwei Raupenfahrschiffen 14 vorgesehen. Die Raupenfahrschiffe 14 sind zu beiden Seiten eines Fahrwerksgrundkörpers 12 angebracht. An dem Fahrwerksgrundkörper 12 sind Aufbauten zum Bilden der Baumaschine 5 vorgesehen, wobei die Baumaschine 5 nur sehr schematisch dargestellt ist. Insbesondere kann an der Baumaschine 5 eine Verstellmechanik mit einer Bohrlafette vorgesehen sein, wie es beispielsweise für ein Ankerbohrgerät oder ein Sprenglochbohrgerät bekannt ist.

Jedes Raupenfahrschiff 14 weist einen Mittenträger 15 auf, an dessen Enden jeweils nur ein schematisch dargestelltes Kettenrad 17, 18 drehbar gelagert und angetrieben ist. Um die Kettenräder 17, 18 läuft eine Raupenkette 16 um, welche eine Vielzahl von segmentartigen Raupenplatten 19 aufweist.

An der nach außen weisenden Seite des Mittenträgers 15 jedes Raupenfahrschiffs 14 ist eine Stützeinrichtung 20 mit einem balkenförmigen Stützelement 22 angeordnet.

Das balkenförmige Stützelement 22 ist über zwei seitlich angebrachte Stellzylinder 24 verstellbar zwischen einer oberen Rückzugsposition, welche in den Figuren 1, 3 und 5 dargestellt ist, und einer nach unten ausgefahrenen Stützposition verstellbar, wie dies in den Figuren 2, 4 und 6 gezeigt ist.

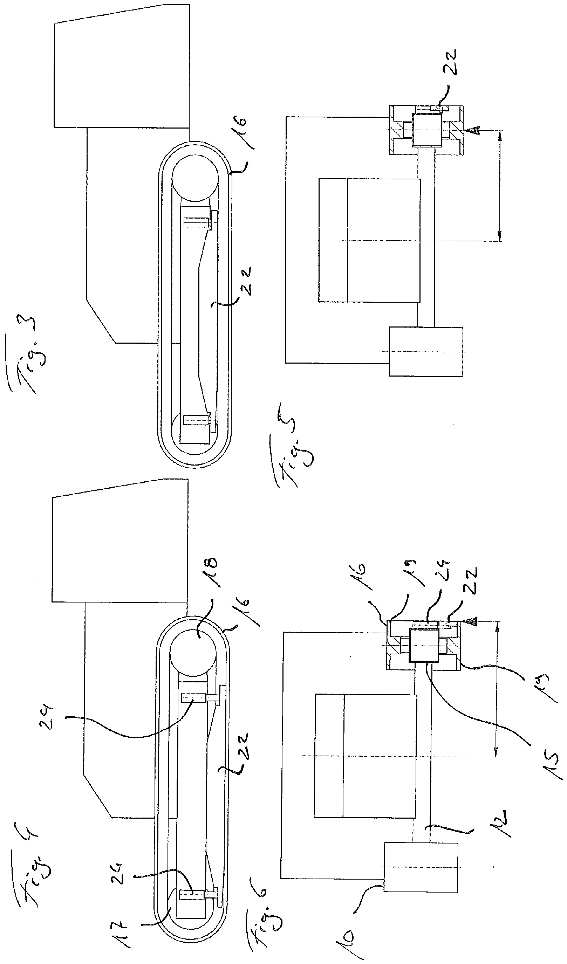

Die Stellzylinder 24, welche vorzugsweise hydraulisch betätigt sind, sind an dem Mittenträger 15 befestigt. Die nach unten ausfahrbaren Stellzylinder 24 sind mit dem balkenförmigen Stützelement 22 verbunden. Dabei sind die Stellzylinder 24 und das Stützelement 22 derart ausgebildet, dass diese nicht nach außen über die Außenabmessungen der Raupenkette 16 vorstehen, wie anschaulich den Figuren 5 und 6 zu entnehmen ist. In der ausgefahrenen Stützposition wird das balkenförmige Stützelement 22 mit Kraft gegen eine Innenseite der Raupenplatten 19 der Raupenkette 16 gedrückt. Insbesondere bei der Verwendung von Raupenplatten 19 aus einem weichen Material, etwa Gummi, kann so in der ausgefahrenen Stützposition eine Kippkante des Raupenfahrwerks 10 beziehungsweise der Baumaschine 5 nach außen verlagert werden. Hierdurch wird die Kippstabilität erhöht.

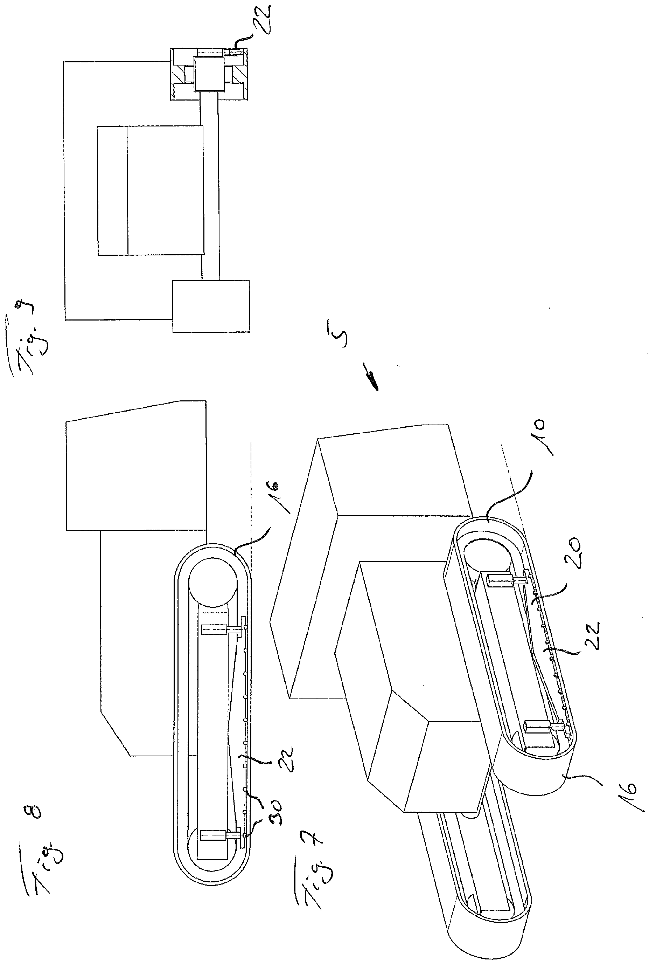

In den Figuren 7 bis 9 ist eine abgewandelte Ausführungsform des Raupenfahrwerks 10 dargestellt, bei welchem das balkenförmige Stützelement 22 entsprechend dem Belastungsverlauf eine dachartige, zur Mitte ansteigende Form aufweist. Ein maßgeblicher Unterschied zu der zuvor beschriebenen Ausführungsform besteht darin, dass an der Unterseite des balkenförmigen Stützelementes 22 Rollenkörper 30 angeordnet sind. Diese erlauben, dass die Raupenkette 16 auch in der dargestellten ausgefahrenen Stützposition weiter bewegt werden kann. Bei dieser erfindungsgemäßen Stützeinrichtung 20 kann also eine Verlagerung der Kippkante durch die ausgefahrene Stützeinrichtung 20 auch während eines Fahrbetriebs der Baumaschine 5 erfolgen.

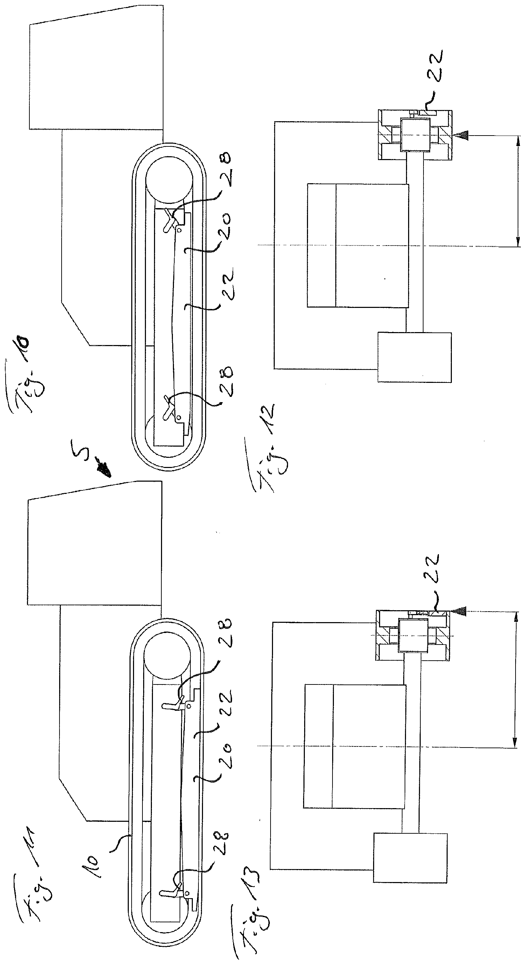

Bei der weiteren abgewandelten Ausführungsform nach den Figuren 10 bis 13 ist ein Raupenfahrwerk 10 einer Baumaschine 5 gezeigt, bei welchem ein balkenförmiges Stützelement 22 einer Stützeinrichtung 20 nicht durch Stellzylinder, sondern durch Stellhebel 28 zwischen einer Rückzugsposition gemäß den Figuren 10 und 12 und einer nach unten ausgefahrenen Stützposition gemäß den Figuren 11 und 13 verstellbar ist. Die Stellhebel 28 können von Hand durch eine Bedienperson betätigt werden. Die Stellhebel 28 können mit einem entsprechenden Übertragungsmechanismus zur Krafterhöhung verbunden sein.

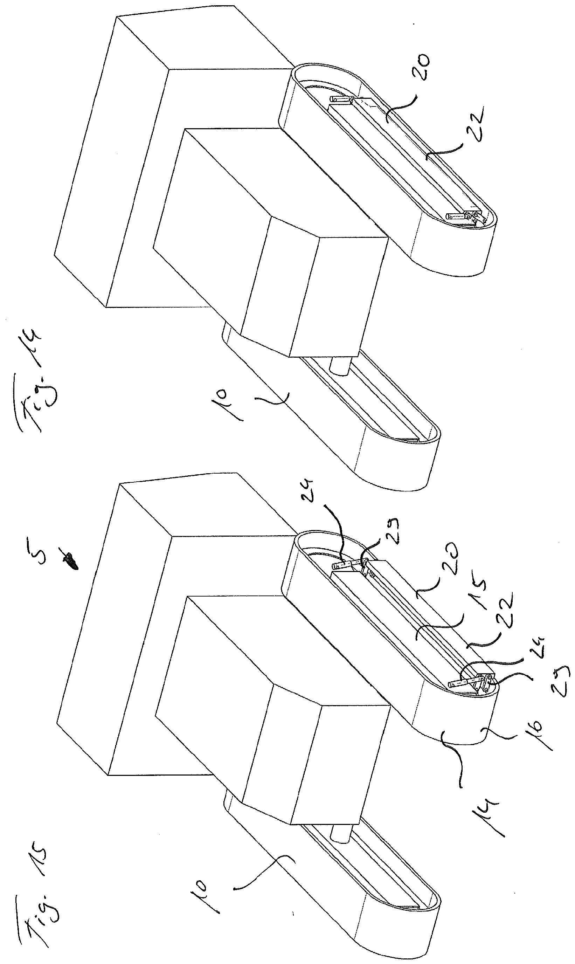

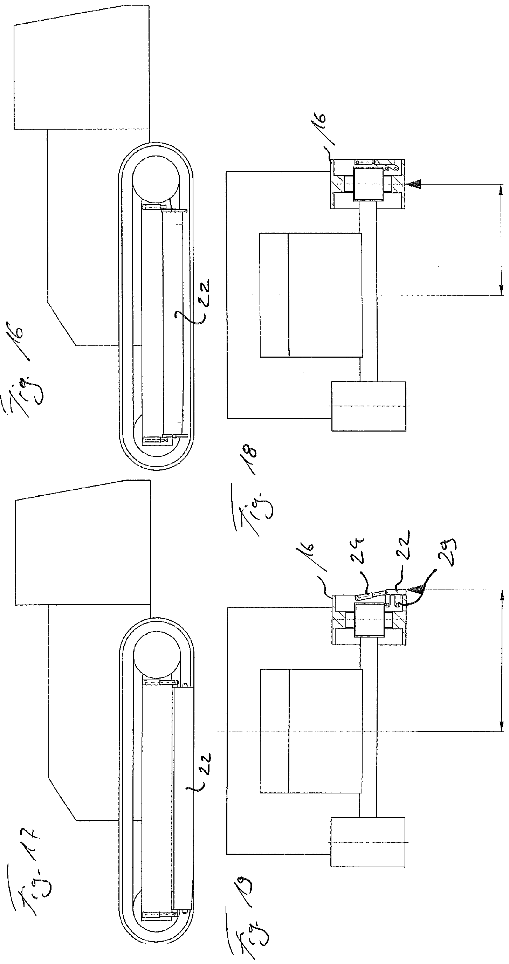

Eine weitere Ausführungsvariante eines erfindungsgemäßen Raupenfahrwerks 10 bei einer Baumaschine 5 ist in den Figuren 14 bis 19 dargestellt. Bei diesem Raupenfahrwerk 10 ist eine Stützeinrichtung 20 mit einem balkenförmigen Stützelement 22 versehen, bei welchem im Unterschied zu den vorausgegangenen Ausführungsformen das Stützelement 22 nicht auf die Raupenkette 16, sondern unmittelbar auf den Boden drückt. Hierbei ist das balkenförmige Stützelement 22 über einen Schwenkmechanismus 29 und seitlichen Stellzylindern 24 an einem Mittenträger 15 des Raupenfahrschiffs 14 angebracht.

Der Schwenkmechanismus 29 ist mit mehreren Schwenkhebeln so ausgebildet, dass das balkenförmige Stützelement 22 in der nach oben rückgezogenen Rückzugsposition, welche in den Figuren 14, 16 und 18 dargestellt ist, und einer nach unten und seitlich verstellten Stützposition verstellbar, wie sie in den Figuren 15, 17 und 19 gezeigt ist. Dabei befindet sich in der Rückzugsposition das balkenförmige Stützelement 22 innerhalb der Außenabmessungen der Raupenkette 16, während das Stützelement 22 in der Stützposition gegenüber der Raupenkette 16 seitlich vorsteht und an den Boden gedrückt ist. Durch diesen Mechanismus kann eine Kippkante noch weiter nach außen verstellt werden, wodurch sich die Kippstabilität der Baumaschine 5 weiter erhöht.

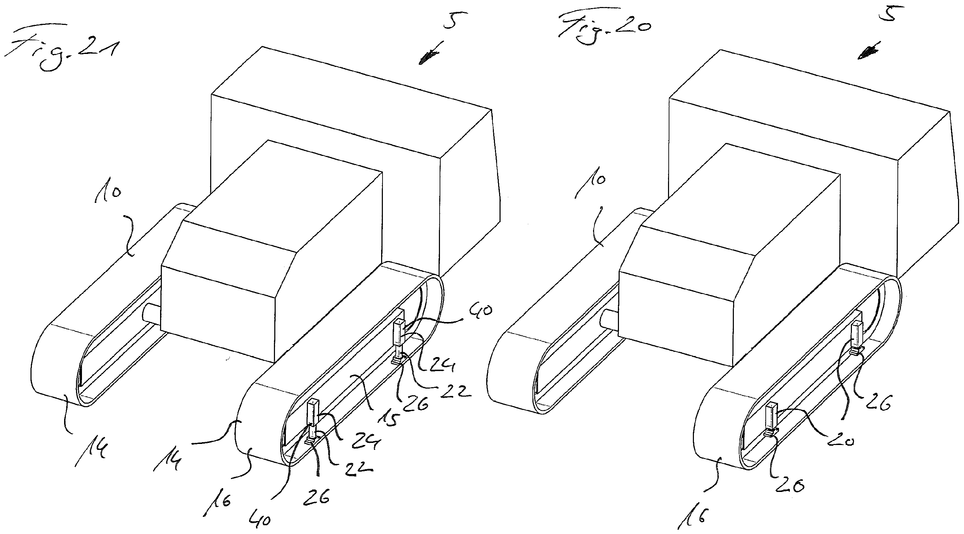

Bei einer weiteren erfindungsgemäßen Ausführungsform gemäß den Figuren 20 und 21 ist ein Raupenfahrwerk 10 einer Baumaschine 5 mit zwei Raupenfahrschiffen 14 vorgesehen, bei welchen die Stützeinrichtung 20 jeweils durch zwei einzelne Stellzylinder 24 gebildet ist. Dabei bilden die ausfahrbaren Kolben der Stellzylinder 24 die eigentlichen Stützelemente 22, wobei an den Kolben untere Auflageplatten 26 angebracht sind. Die Stützelemente 22 bilden so separate Stempel 40. Die unmittelbar am Mittenträger 15 der Raupenfahrschiffe 14 angebrachten Stellzylinder 24 drücken die Auflageplatten 26 in der Stützposition gemäß Fig. 26 an den inneren Randbereich der Raupenkette 16 an. Auch hierdurch kann eine Verlagerung der Kippkante nach außen an den Randbereich der Raupenkette 16 erfolgen.

## Patentansprüche

1. Raupenfahrwerk mit
einem Fahrwerksgrundkörper (12), an dessen Längsseiten jeweils mindestens ein Raupenfahrschiff (14) angeordnet ist,
**dadurch gekennzeichnet,**
**dass** mindestens ein Raupenfahrschiff (14) mit einer Stützeinrichtung (20) mit mindestens einem Stützelement (22) versehen ist, welches verstellbar zwischen einer Rückzugsposition und einer Stützposition gelagert ist, in welcher das Stütz-element (22) zur Verlagerung einer Kippkante an dem Raupenfahrschiff (14) zum Boden hin gedrückt ist.

2. Raupenfahrwerk nach Anspruch 1,
**dadurch gekennzeichnet,**
**dass** zum Verstellen des Stützelementes (22) mindestens ein Stellzylinder (24) vorgesehen ist, welcher an dem Raupenfahrschiff (14) angebracht ist.

3. Raupenfahrwerk nach Anspruch 1 oder 2,
**dadurch gekennzeichnet,**
**dass** eine Raupenkette (16) Raupenplatten (19) aufweist und
**dass** das mindestens eine Stützelement (22) in der Stützposition zum Übertragen einer Druckkraft auf einem Randbereich mindestens einer Raupenplatte (19) aufsitzt.

4. Raupenfahrwerk nach Anspruch 1 oder 2,
**dadurch gekennzeichnet,**
**dass** das mindestens eine Stützelement (22) in der Stützposition unmittelbar auf dem Boden aufsitzt.

5. Raupenfahrwerk nach einem der Ansprüche 1 bis 4,
**dadurch gekennzeichnet,**
**dass** das Stützelement (22) an seinem freien Ende eine Auflageplatte (26) und/oder mindestens einen Rollenkörper (30) aufweist.

6. Raupenfahrwerk nach Anspruch 5,
**dadurch gekennzeichnet,**
**dass** mehrere Stützelemente (22) an jedem Raupenfahrschiff (14) angeordnet sind, wobei jedes Stützelement (22) als ein separater Stempel (40) ausgebildet ist.

7. Raupenfahrwerk nach Anspruch 5 oder 6,
**dadurch gekennzeichnet,**
**dass** die Auflageplatte (26) balkenförmig ausgebildet ist.

8. Raupenfahrwerk nach Anspruch 7,
**dadurch gekennzeichnet,**
**dass** die balkenförmige Auflageplatte (26) mit mehreren Stellzylindern (24) verbunden ist.

9. Raupenfahrwerk nach einem der Ansprüche 1 bis 8,
**dadurch gekennzeichnet,**
**dass** die Stützeinrichtung (20) an einem Nabenbereich der Räder (17, 18) des Raupenfahrschiffs (14) angebracht ist.

10. Raupenfahrwerk nach Anspruch 9,
**dadurch gekennzeichnet,**
**dass** die Stützeinrichtung (20) zumindest in der Rückzugsposition des mindestens einen Stützelementes (22) nicht über einen Außenumfang des Raupenfahrschiffs (14) hinausragt.

11. Baumaschine,
**dadurch gekennzeichnet,**
**dass** ein Raupenfahrwerk (10) nach einem der Ansprüche 1 bis 10 angeordnet ist.

12. Baumaschine nach Anspruch 11,
**dadurch gekennzeichnet,**
**dass** diese als ein Bohrgerät, ein Kran, ein Bagger oder ein Trägergerät für eine Schlitzwandfräse, eine Ramme oder einen Rüttler ausgebildet ist.
